# EUROPEAN PATENT SPECIFICATION

(11) **EP 3 273 377 B1**
(45) Date of publication and mention of the grant of the patent: **12.09.2018**
(21) Application number: 16180574.2
(22) Date of filing: 21.07.2016
(51) Int. Cl.: G06F 21/31, H04L 29/06, G06F 21/36

(54) **SYSTEM FOR DYNAMIC IMAGE CAPTCHA**
SYSTEM FÜR DYNAMISCHES BILDCAPTCHA
SYSTÈME D'IMAGE DYNAMIQUE CAPTCHA

(43) Date of publication of application: 24.01.2018
(73) Proprietor: Deutsche Telekom AG, 53113 Bonn (DE)
(72) Inventor: ROSHANDEL, Mehran, 13591 Berlin (DE); NADERI, Babak, 14169 Berlin (DE); GHASEMI, Saeed, 13509 Berlin (DE)
(74) Representative: Vossius & Partner Patentanwälte Rechtsanwälte mbB

(56) References cited:
- EP-A1- 2 492 838
- EP-A2- 2 339 497
- US-A1- 2012 011 564
- US-A1- 2014 059 663
- US-A1- 2016 055 329
- Jeremy Elson ET AL: "Asirra: A CAPTCHA that Exploits Interest-Aligned Manual Image Categorization", Proceedings of 14th ACM Conference on Computer and Communications Security (CCS), 2 November 2007 (2007-11-02), XP055015090, Retrieved from the Internet: URL:http://research.microsoft.com/en-us/um /people/jelson/asirra/papers/ccs2007.pdf [retrieved on 2011-12-16]

## Description

### Field of the Invention

The invention is related to a "Completely Automated Public Turing test to Tell Computer and Human Apart" (throughout the following abbreviated by "CAPTCHA"), and in particular to a method for providing a CAPTCHA employing dynamic images and a system therefor. The invention is defined in the independent claims.

### Background of the Invention

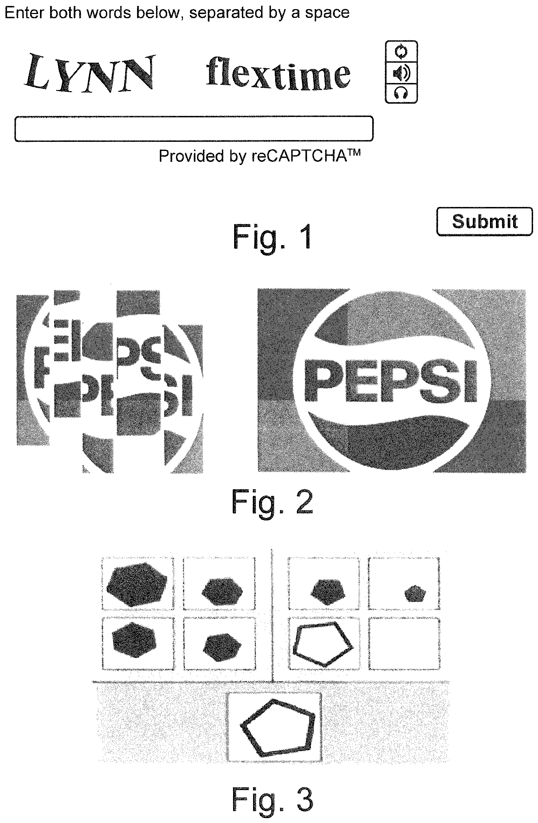

Nowadays, the life without the Internet and online services is not imaginable. Internet sites and online services are growing daily, and respectively, the related dangers are growing in parallel. One of these kinds of dangers is kind of Internet bots, which try to pose themselves as a human and act like a human. An Internet bot (in the following also shortly termed "bot") can perform simple and structured tasks, which it is programmed for, in many times faster than a human. It can, for instance, create a free e-mail account (or many e-mail accounts) for a likely malicious (or even commercial) purpose. Bots can also disturb an online appointment system or voting system by filling forms thousands of times to a certain option. To cope with such a problem, many Internet service providers (e. g. Google) use a technology named CAPTCHA (Completely Automated Public Turing test to Tell Computer and Human Apart). The CAPTCHA technology employs programs that protect web based services against malicious bots by generating and grading tests that humans can easily pass, but current computer programs cannot or increase their costs [4]. For instance, a human can read distorted text (as illustrated in Figure 1), but this simple action would be difficult for current programs to solve. More information thereon can be found in the patents listed by Refs. [1 - 3, 5]).

The CAPTCHAs are used in several web based services in different stages like creating accounts, reseting passwords or against dictionary attacks to any online account during login process. In addition, it is used in wide varity of online sevices like poles, appointmnets, news groups, blogs, etc.

### State of the art

The following list itemizes various state-of-the-art types of CAPTCHAs:
- Text based: this type can be realized by several implementation models. Figure 1 illustrates a typical implementation used by Google.
- Graphic based (e. g. Bongo project [15]): Displays two series of blocks, wherein the user must then find the characteristics that sets the two series apart into two different categories e. g. all element in the right is drawn with thick lines. The user is asked to determine, which series - each of four single blocks - belongs to which category.
- Graphic based (e. g. Pix project [16, 17]): In this method, a large database of labeled images is used. Each time an object is randomly selected and four images related to that object are randomly picked from the images database, and then the images are distorted. Users will be asked to pick the object which is the subject of images form a list of words.
- Audio based: In this CAPTCHA, a word or a sequence of numbers is picked randomly from a database and rendered in an audio clip using a TTS software. Then, the speech signal files is degraded by common degradations (like codecs, packet loss, and background noise) and presented to the user. The user is asked to identify and type the word or numbers he has heard.
- Game based: There are many implementation types of game based CAPTCHAs, e. g. puzzle CAPTCHA. Usually, in a puzzle CAPTCHA a given picture is divided to chunks. A user is supported to combine these chunks so as to form the complete picture, same as the original one.
- Video based: It is a newer and less commonly seen CAPTCHA system. In video-based CAPTCHAs, three words (tags) are provided to the user which describes a video. The user's tag must match to a set of automatically generated "ground truth tags": only then, the test is said to be passed. The term "video CAPTCHA" is used to any CAPTCHA that uses a video in order to present information to a user.
- Advertise based CAPTCHA: The goal of this method is to create a fun interactive technology, which delivers a fully captured audience for advertisers to brand their message to without compromising the security of the publisher's website. In other words, this approach gives the opportunity to the advertisers to indicate (advertise) their product (or message, motto, etc.) without breaking the security rules of publisher's website. As an incentive to publishers, ADSCAPTCHATM will share advertising revenue with its publishers, so they can continue stop spam while making money [12].

Note that in case that any degradation on the content is used (on image or audio video), the level of difficulty of test is increased by increasing the degradation parameters (like amount of noise, radiation, etc.). The CAPTCHA service providers use those parameters to increase the difficulty in case that they suspect that the requested user is a potential bot. It leads to low quality of experience for real users.

A further widely used CAPTCHA type known from the prior art is the concept of "reCAPTCHA". Detailed information thereon can be found in Refs. [6] and [11]. Google describes the concept as follows [10]:
"Millions of CAPTCHAs are solved by people every day. reCAPTCHA makes positive use of this human effort by channeling the time spent solving CAPTCHAs into digitizing text, annotating images, and building machine learning datasets. This in turn helps preserve books, improve maps, and solve hard AI problems."

Further according to Google [10], main applications of the reCAPTCHA concept are:
- "reCAPTCHA helps solve hard problems in Artificial Intelligence. High quality human labelled images are compiled into datasets that can be used to train Machine Learning systems. Research communities benefit from such efforts that help build the next generation of groundbreaking Artificial Intelligence solutions."
- "reCAPTCHA digitizes books by turning words that cannot be read by computers into CAPTCHAs for people to solve. Word by word, a book is digitized and preserved online for people to find and read."
- "reCAPTCHA improves our knowledge of the physical world by creating CAPTCHAs out of text visible on Street View imagery. As people verify the text in these CAPTCHAs, this information is used to make Google Maps more precise and complete. So if you're a Google Maps user, your experience (and everyone else's) will be even better."

Whereas the above described types of CAPTCHAs proof powerful in resisting fully machine driven attempts to pass the CAPTCHA, they may fail when humans at least partly contribute to these attempts. One possibility to systematically deploy human intelligence in order to pass CAPTCHAs makes use of "crowdsourcing". The crowdsourcing micro-task platforms provide human intelligence as a service through API. This will be explained in the following.

### Attacking CAPTCHA/reCAPTCHA via crowdsourcing services

According to Ref. [13], "crowdsourcing is an innovative way of organizing jobs and workers. The collaborative brainstorming enables hundreds or even thousands of people to contribute their thoughts and energies to a single task and can support complicated jobs that conventional means could never manage. Crowdsourcing uses an Internet task market, usually called a *crowdsourcing platform*, to connect workers to jobs. It enables those workers to take the kinds of jobs that they like and to complete those jobs when and where they want. Employers can find the kinds of workers they need, with the specific skills for their jobs, and pay for only the amount of work they need."

Thus, it is possible to include human intelligence, using a crowdsourcing micro-task platform API, in the attack process such that the bot tries to fraudulently or maliciously make an image from the CAPTCHA/reCAPTCHA question and automatically deliver it to an unaware "human", who is working on a normal task in crowdsourcing platform, and use his/her answer to solve the CAPTCHA/reCAPTCHA question. Then, one will be faced with a "human/machine" cooperation, which can break the security that has been putting on under attacked web base services. In particular, the questioner model of reCAPTCHA could also be learned by the techniques of machine learning and may eventually be circumvented.

As a consequence, there is a need for the provision of a CAPTCHA that cannot be circumvented (i. e., reliably be passed) by techniques employing crowdsourcing, or that at least considerably impede attempts to pass the CAPTCHA by those techniques.

The object of the present invention is thus the provision of a method and a system that provide a CAPTCHA that cannot be circumvented (i. e., reliably be passed) by techniques employing crowdsourcing, or that at least considerably impede attempts to pass the CAPTCHA by techniques using crowdsourcing.

This object is achieved by the method and the system with the features as disclosed by the claims presented in this document.

### Summary of the Innovation

The present invention - termed "Dynamic Image CAPTCHA" (in the following also shortly referred to as "DIC") - employs techniques (e. g. dynamic images, time limitation as a technique for cope with the threats of crowdsourcing) to tackle the above-identified problem with any kinds of the Internet bots. In the following, a new method for a more secure CAPTCHA system based on dynamic imaging will be described, which comprises countermeasures also against social media hacking.

One aspect of the invention relates to a method for providing a CAPTCHA (completely automated public Turing test to tell computers and humans apart). The method comprises the steps:
(1a) sending, by a browser or web application of a client, a request for providing a CAPTCHA to a server;
(1b) generating, on a server, a set of pictures, the set containing at least two pictures, wherein each of the pictures is assigned a unique identifier, and a temporal identifier which is generated by each request based on the unique identifier; and sending the set of pictures and the temporal identifiers, and the assignment between temporal identifiers and pictures to the browser or web application;
(1b') generating, on the server, a question that is associated with one or more of the pictures of said set, and wherein the question is assigned a question identifier; sending the question and the question identifier to the browser or web application; and storing, on the server, the temporal identifiers assigned to the pictures, with which the question is associated, and the question identifier;
(1b") distributing the pictures of the set to one or more subset(s) of pictures, wherein each of the subsets comprises at least two pictures;
(1b"') defining, for each of the subsets, a presentation position within the browser or web application, and generating, for each of the subsets, an enumeration for the pictures of the respective subset;
(1c) presenting, in the browser or web application, the question;
(1d) presenting, consecutively, in the browser or web application, for each of the subsets at the position defined in step (1b"') any of its pictures for a predetermined presentation time, wherein the pictures of the respective subset are presented in the order of the enumeration of the pictures in that subset,
(1e) wherein, for each of the pictures or subsets presented, the browser or web application detects whether or not the user performs a confirmation action during the presentation time of the picture, and
(1f) wherein, when the browser or web application has detected a confirmation action, the temporal identifier(s) assigned to the presented picture(s) while the confirmation action has been performed and the question identifier are sent to the server;
(1g) if one or more temporal identifier(s) and the question identifier have been received by the server from the client: checking, by the server, for identity of the temporal identifier(s) sent to the server in the foregoing step and the temporal identifier(s) stored in step (1b') for the question identifier received in this step;
(1h) if identity has been confirmed in the foregoing step: sending, by the server, information that the CAPTCHA has been successfully passed to the to the client; otherwise: sending, by the server, information that the CAPTCHA has not been successfully passed to the client.

Here, a "set of pictures" (as generated in step (1b)) denotes an unordered collection of pictures. An order of the pictures of such a set (or subset of the set) is then established in step (1b"') by the generation of an "enumeration". However, as the enumeration is not intrinsic to the set, the pictures of a set can be re-enumerated when this appears appropriate.

The term "presentation time" refers to the time a certain picture is shown to the user, when the pictures of the set of pictures are consecutively presented to the user.

The expression "confirmation action" relates to any action of a user that is performed during the presentation time of a picture, and which is suitable to notify the browser or web application that the shown picture shall be chosen by the user. Preferably, the user chooses a picture, when he/she assumes that the picture represent the "true" answer on the question or request he/she has been asked before (in step (1c)).

In one embodiment, the method is performed such that in step (1b), the set of pictures is generated by choosing a set from a pool of fixed sets of pictures being held available on the server.

In one embodiment, the method is performed such that in step (1b), the set of pictures is generated by choosing at least two pictures from a pool of pictures being held available on the server.

In a preferred embodiment of the method, the method is performed such that:
in step (1b"), the distribution of the pictures to the subsets is carried out randomly; and/or
in step (1b'"), the definition of the presentation positions for the pictures of the subsets is carried out randomly; and/or
in step (1b'"), for any one of the subsets, the enumeration for the pictures is generated in a random fashion.

Preferably, in step (1b"), the distribution of the pictures to the subsets is carried out by the server, and step (1b") comprises the further substep of:
sending, by the server, the arrangement of the pictures defined by the subsets to the browser of web application; and/or
wherein in step (1b"'), for at least part of the subsets, the enumeration for the pictures is generated by the server, and wherein step (1b"') comprises a further substep of:
sending, by the server, the generated enumeration(s) of the pictures to the browser or web application.

Further, step (1b") and/or step (1b"') may be performed by the browser or web application.

Also, when all pictures have been presented without detection of a confirmation action in step (1e), steps (1f) to (1h) may be replaced by the following step:
finishing the CAPTCHA and handing over to the browser or web application the information that the CAPTCHA has not been successfully passed.

Note that in the latter case, steps (1f) to (1h) may be without any effect.

Moreover, when all pictures have been presented without detection of a confirmation action in step (1e), steps (1d) and (1e) may be repeated,
wherein the number of repetitions is preferably limited, more preferably limited to a maximum number of 2 repetitions, and most preferably limited to a maximum number of 1 repetition.

According to one embodiment, for each of the subsets, the number of pictures in the subset is between 2 and 20, preferably between 3 and 10, and most preferably 4 or 5.

According to one embodiment, the presentation time for each of the presented pictures is between 0.5 to 10 seconds, preferably between 1 to 5 seconds, and most preferably between 2 to 4 seconds.

When a predetermined maximum time is exceeded, the following step may be performed:
finishing the CAPTCHA and handing over to the browser or web application the information that the CAPTCHA has not been successfully passed.

In one embodiment of the method, the followings steps may be performed:
(i) repeating step (1b) with the additional condition that the question or request is associated with at least one of the pictures of the newly generated set of pictures,
   wherein the new set of pictures is different from the previously generated set(s) of pictures;
(ii) repeating the steps of the method beginning from step (1b"),
wherein the repetition according to any one of steps (i) and (ii) is limited to a predetermined maximum number, the maximum number being set preferably to 1, 2, or 3.

In one embodiment of the method, the following step may be performed:
(a) repeating the steps of the method beginning from step (1b'),
   wherein the new question generated in step (1b') is different from the previously generated question(s),
   wherein the repetition according to step (a) is limited to a predetermined maximum number, the maximum number being set preferably to 1, 2, or 3.

In one embodiment of the method, the following step may be performed:
(A) repeating the steps of the method beginning from step (1b),
   wherein the new set of pictures is different from the previously generated set(s) of pictures,
   wherein the new question is different from the previously generated question(s), and
   wherein the repetition according to step (A) is limited to a predetermined maximum number, the maximum number being set preferably to 1, 2, or 3.

In a further embodiment of the method, step (1f) comprises additionally: sending a secret code of the client to the server; and step (1g) comprises additionally: receiving the secret code and using the secret code for authenticating the client.

Here, a "secret code" is an identifier of the client which is kept secret on the client side machines and bound to them. It is used for authenticating the client.

A further aspect of the invention relates to a system for providing a completely automated public Turing test to tell computers and humans apart (CAPTCHA), according to the method described above. Said system comprises:
a server; and
a client, on which a browser or a web application is installed.

In particular, the server is configured for:
generating a set of pictures, the set containing at least two pictures, wherein each of the pictures is assigned a unique identifier, and a temporal identifier which is generated by each request based on the unique identifier;
sending the set of pictures and the temporal identifiers, and the assignment between temporal identifiers and pictures to the browser or web application;
generating a question that is associated with one or more of the pictures of said set, and wherein the question is assigned a question identifier;
sending the question and the question identifier to the browser or web application;
storing the temporal identifiers assigned to the pictures, with which the question is associated, and the question identifier;
if one or more temporal identifier(s) and the question identifier have been received by the server from the client: checking for identity of the temporal identifier(s) sent to the server and the stored temporal identifier(s);
if identity has been confirmed: sending information that the CAPTCHA has been successfully passed to the to the client;
otherwise: sending, by the server, information that the CAPTCHA has not been successfully passed to the client.

Further, the browser or web application is configured for:
sending a request for providing a CAPTCHA to a server;
presenting the question;
presenting, consecutively, for each of the subsets at a predefined position any of its pictures for a predetermined presentation time, wherein the pictures of the respective subset are presented in the order of a predefined enumeration of the pictures in that subset,
wherein the browser or web application is configured for detecting, for each of the pictures or subsets presented, whether or not the user performs a confirmation action during the presentation time of the picture, and wherein the browser or web application is configured for sending to the server the temporal identifier(s) assigned to the presented picture(s) while the confirmation action has been performed and the question identifier, when the browser or web application has detected a confirmation action.

In one embodiment of the system, either the server or the browser or web application is configured for:
distributing the pictures of the set to one or more subset(s) of pictures, wherein each of the subsets comprises at least two pictures.

In one embodiment of the system, either the server or the browser or web application is configured for:
defining, for each of the subsets, a presentation position within the browser or web application.

In one embodiment of the system, either the server or the browser or web application is configured for:
generating, for each of the subsets, an enumeration for the pictures of the respective subset.

Other aspects, features, and advantages will be apparent from the summary above, as well as from the description that follows, including the figures and the claims.

### List of figures:

Fig. 1: Example of a typical CAPTCHA known from prior art;
Fig. 2: Example of adsCAPTCHAs;
Fig. 3: Graphic CAPTCHA;

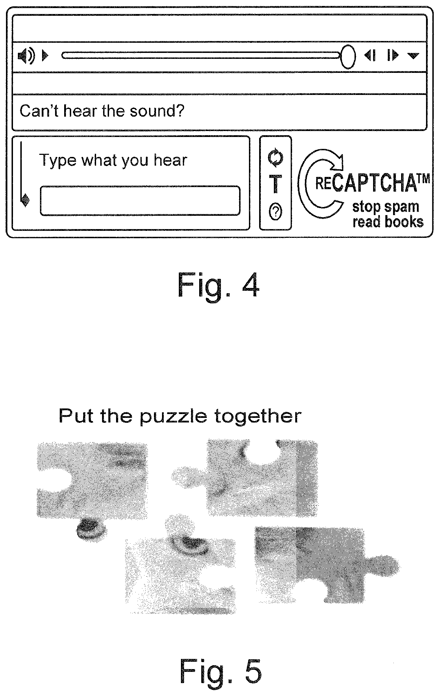

Fig. 4: Audio CAPTCHA;
Fig. 5: Game CAPTCHA;

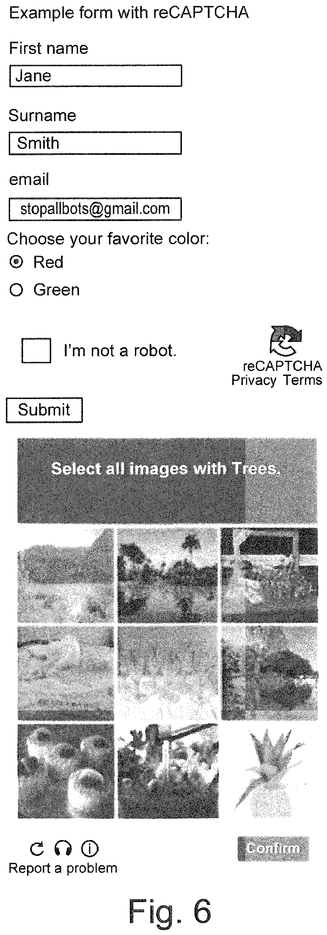

Fig. 6: Example of "reCAPTCHA";
Fig. 7: Example of "Dynamic Image CAPTCHA" according to the invention.

### Dynamic Image CAPTCHA (DIC)

In the following, it will be described how to cope, according to the invention, with the above-identified problems. In the system and the method of the invention (DIC technology), the DIC service provider has a server with many dynamic pictures; these pictures can have any content (commercial, pedagogical or whatever a provider wants to show). Depending on the topics of the images, there will be a question and a single answer, but the user will see a set of *N* pictures, which is changing periodically (meaning every x seconds, another set of images will be shown). The user will be asked, for instance, to click on the "true" image(s) in the image set, i. e., on one (or more) of said N pictures that have been pre-assigned to the question. In other words, as the picture set is shown in chronological order, the user has to wait till he/she sees the true picture and then click on it. The periodical changes of image set leads to tackle any abuse with crowdsourcing technology. As time limitation on DIC expires, answers will not be accepted anymore and:
1) A new set of pictures belonging to the same question would be loaded and shown to the user. Of course, the order of pictures is random and is changed after each load. For example, if the true option for a question was the second picture among all, after passing the time dead-line and load a new set of pictures, the correct answer may place as the forth, third or even again the second picture.
2) A different question corresponding to the shown pictures would be loaded, i. e., the set of pictures does not change, but the correct answer (picture) does.
3) A complete new question with a new set of pictures would be taken and shown to the user. Here, the same above mentioned rule would be used, i. e., the order of pictures (regardless of the question and/or the set of pictures) would always dynamically/randomly change.

The combination of a DIC as above and time limitation makes it possible to provide a new human-computer detection test, which can be both, safer against bots and more attractive for any online service provider (or even business companies). The idea is that one needs not to be worried, if the HTML code of this CAPTCHA would be available for everyone, because the important point here is the approach being employed to secure the CAPTCHA. This approach, an example of the DIC technique according to the invention, is preferably based on a main DIC server, which holds a number of diverse dynamic pictures (and corresponding questions). In the DIC server, each picture has a unique identifier, according to which the server later can decide, whether or not the image chosen by the user is the correct one. More precisely, the server knows that the image with a certain unique identifier (e. g. TE1236Xr1) is the correct answer. Note that each time a new temporary identifier is created for each image before sending to the client. Therefore, a client does not reveal the real identifier of specific image. When the user clicks on one of the images, the corresponding (intermediate) code/identifier is sent back to the DIC server, and then the server compares the returned identifier with that one it knows as the correct answer. If they are equal, the task is successfully done, and if not, a new set of pictures or question depending on the implementation policy would be taken.

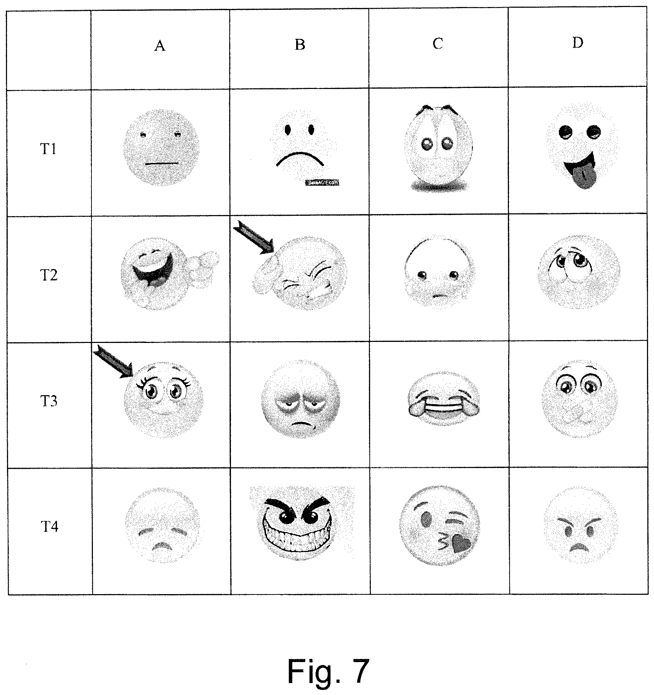

An example of the DIC approach according to the invention is shown in Fig. 7. In the table of Fig. 7, four different sets of pictures A, B, C, and D are shown, each of which comprising four stickers (emoticons) depicted in a column of the table. Of course, all shown pictures should be changed dynamically. As in a printed document, the motion of pictures cannot be simulated, the pictures are shown at 4 different time intervals T1, T2, T3, and T4 being represented by the rows of the table of Fig. 7. The time intervals T1 to T4 may preferably be of equal time length, e. g., 1 second. For any of the sets of pictures A, B, C, and D, only one picture is assigned uniquely to a question that has been created for the respective set of pictures, this picture being termed the "true picture" (of the respective set). Accordingly, only in one of the shown pictures the user may recognize the true picture and he/she has 1 second to click on it.

As to the first set of pictures (i. e., the set shown in column A), a likely question could be: "Question 1 - please select all pictures containing smiles!" Then, the user should click within the third second (T3) after the DIC has been started (marked by the arrow in the field given by column A and row T3).

The (funny) question associated with the second set of pictures (set depicted in column B) may be: "Question 2 - which picture represents a person who has children in teen age?" The answer is then given by the "true picture" depicted at column B/row T2 (again marked by an arrow).

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References

[1] http://www.google.de/patents/DE202013100910U1?cl=en
[2] Wang, James Z., Ritendra Datta, and Jia Li. "Image-based CAPTCHA generation system." U.S. Patent No. 7,929,805. 19 Apr. 2011.
[3] http://www.google.com/patents/US8483518
[4] http://www.ijcsit.com/docs/Volume%205/vol5issue02/ijcsit20140502289.pdf
[5] https://www.google.com/patents/US20130091027?dq=advertising+captcha&hl=de&s a=X&sqi=2&pjf=1&ved=0ahUKEwio6Ojr2bDJAhUMEiwKHeJkD_8Q6AEIHDAA
[6] http://www.cs.cmu.edu/∼biglou/reCAPTCHA_Science.pdf
[7] http://www.captcha.net/captcha_crypt.pdf
[8] http://www.nytimes.com/2002/12/10/science/human-or-computer-take-this-test.html
[9] http://radar.oreilly.com/2007/05/recaptcha-stop-spam-read-books.html http://www.wired.com/2007/06/ff-humancomp/
[10] https://www.google.com/recaptcha/intro/index.html
[11] http://www.google.com/patents/US20120023549
[12] http://wwl.prweb.com/prfiles/2010/10/27/4176174/NewadvertisingtoolbasedonCAP TCHA.pdf
[13] http://www.dummies.com/how-to/content/crowdsourcing-for-dummies-cheat-sheet-uk-edition.html
[14] http://www.dummies.com/how-to/content/crowdsourcing-advantages-five-things-crowds-do-wel.html
[15] http://www.captcha.net/captcha_cacm.pdf
[16] http://www.ijsce.org/attachments/File/v2i5/E1038102512.pdf
[17] http://www.captcha.net/captchas/pix/

## Claims

1. Method for providing a completely automated public Turing test to tell computers and humans apart, CAPTCHA, comprising the steps:
(la) sending, by a browser or web application of a client, a request for providing a CAPTCHA to a server;
(1b) generating, on a server, a set of pictures, the set containing at least two pictures,
wherein each of the pictures is assigned a unique identifier, and a temporal identifier which is generated by each request based on the unique identifier;
and sending the set of pictures and the temporal identifiers, and the assignment between temporal identifiers and pictures to the browser or web application;
(1b') generating, on the server, a question that is associated with one or more of the pictures of said set, and wherein the question is assigned a question identifier;
sending the question and the question identifier to the browser or web application; and storing, on the server, the temporal identifiers assigned to the pictures, with which the question is associated, and the question identifier;
(1b") distributing the pictures of the set to one or more subset(s) of pictures, wherein each of the subsets comprises at least two pictures;
(1b"') defining, for each of the subsets, a presentation position within the browser or web application, and generating, for each of the subsets, an enumeration for the pictures of the respective subset;
(1c) presenting, in the browser or web application, the question;
(1d) presenting, consecutively, in the browser or web application, for each of the subsets at the position defined in step (1b'") any of its pictures for a predetermined presentation time, wherein the pictures of the respective subset are presented in the order of the enumeration of the pictures in that subset,
(1e) wherein, for each of the pictures or subsets presented, the browser or web application detects whether or not the user performs a confirmation action during the presentation time of the picture, and
(1f) wherein, when the browser or web application has detected a confirmation action, the temporal identifier(s) assigned to the presented picture(s) while the confirmation action has been performed and the question identifier are sent to the server;
(1g) if one or more temporal identifier(s) and the question identifier have been received by the server from the client: checking, by the server, for identity of the temporal identifier(s) sent to the server in the foregoing step and the temporal identifier(s) stored in step (1b') for the question identifier received in this step;
(1h) if identity has been confirmed in the foregoing step: sending, by the server, information that the CAPTCHA has been successfully passed to the to the client;
otherwise: sending, by the server, information that the CAPTCHA has not been successfully passed to the client.

2. The method according to claim 1, wherein in step (1b), the set of pictures is generated by choosing a set from a pool of fixed sets of pictures being held available on the server.

3. The method according to claim 1, wherein in step (1b), the set of pictures is generated by choosing at least two pictures from a pool of pictures being held available on the server.

4. The method according to any one of claims 1 to 3, wherein:
in step (1b"), the distribution of the pictures to the subsets is carried out randomly; and/or
in step (1b"'), the definition of the presentation positions for the pictures of the subsets is carried out randomly; and/or
in step (1b'"), for any one of the subsets, the enumeration for the pictures is generated in a random fashion.

5. The method according to any one of claims 1 to 4,
wherein in step (1b"), the distribution of the pictures to the subsets is carried out by the server, and step (1b") comprises the further substep of:
sending, by the server, the arrangement of the pictures defined by the subsets to the browser of web application; and/or
wherein in step (1b"'), for at least part of the subsets, the enumeration for the pictures is generated by the server, and wherein step (1b'") comprises a further substep of:
sending, by the server, the generated enumeration(s) of the pictures to the browser or web application.

6. The method according to any one of claims 1 to 5, wherein step (1b") and/or step (1b"') is performed by the browser or web application.

7. The method according to any one of claims 1 to 6, wherein, when all pictures have been presented without detection of a confirmation action in step (1e), steps (1f) to (1h) are replaced by the following step:
finishing the CAPTCHA and handing over to the browser or web application the information that the CAPTCHA has not been successfully passed.

8. The method according to any one of claims 1 to 6, wherein, when all pictures have been presented without detection of a confirmation action in step (1e), steps (1d) and (1e) are repeated,
wherein the number of repetitions is preferably limited, more preferably limited to a maximum number of 2 repetitions, and most preferably limited to a maximum number of 1 repetition.

9. The method according to any one of claims 1 to 8, wherein for each of the subsets, the number of pictures in the subset is between 2 and 20, preferably between 3 and 10, and most preferably 4 or 5.

10. The method according to any one of claims 1 to 9, wherein the presentation time for each of the presented pictures is between 0.5 to 10 seconds, preferably between 1 to 5 seconds, and most preferably between 2 to 4 seconds.

11. The method according to any one of claims 1 to 10, wherein, when a predetermined maximum time is exceeded, the following step is performed:
finishing the CAPTCHA and handing over to the browser or web application the information that the CAPTCHA has not been successfully passed.

12. The method according to any one of claims 1 to 11, wherein the followings steps are performed:
(i) repeating step (1b) with the additional condition that the question or request is associated with at least one of the pictures of the newly generated set of pictures,
wherein the new set of pictures is different from the previously generated set(s) of pictures;
(ii) repeating the steps of the method beginning from step (1b"),
wherein the repetition according to any one of steps (i) and (ii) is limited to a predetermined maximum number, the maximum number being set preferably to 1, 2, or 3.

13. The method according to any one of claims 1 to 11, wherein the following step is performed:
(a) repeating the steps of the method beginning from step (1b'),
wherein the new question generated in step (1b') is different from the previously generated question(s),
wherein the repetition according to step (a) is limited to a predetermined maximum number, the maximum number being set preferably to 1, 2, or 3.

14. The method according to any one of claims 1 to 11, wherein the following step is performed:
(A) repeating the steps of the method beginning from step (1b),
wherein the new set of pictures is different from the previously generated set(s) of pictures,
wherein the new question is different from the previously generated question(s), and
wherein the repetition according to step (A) is limited to a predetermined maximum number, the maximum number being set preferably to 1, 2, or 3.

15. The method according to any one of claims 1 to 14, wherein step (1f) comprises additionally: sending a secret code of the client to the server; and step (1g) comprises additionally: receiving the secret code and using the secret code for authenticating the client.

16. A system for providing a completely automated public Turing test to tell computers and humans apart, CAPTCHA, according to the method of any one of claims 1 to 14, the system comprising:
a server; and
a client, on which a browser or a web application is installed;
the server being configured for:
generating a set of pictures, the set containing at least two pictures, wherein each of the pictures is assigned a unique identifier, and a temporal identifier which is generated by each request based on the unique identifier;
sending the set of pictures and the temporal identifiers, and the assignment between temporal identifiers and pictures to the browser or web application;
generating a question that is associated with one or more of the pictures of said set, and wherein the question is assigned a question identifier;
sending the question and the question identifier to the browser or web application;
storing the temporal identifiers assigned to the pictures, with which the question is associated, and the question identifier;
if one or more temporal identifier(s) and the question identifier have been received by the server from the client: checking for identity of the temporal identifier(s) sent to the server and the stored temporal identifier(s);
if identity has been confirmed: sending information that the CAPTCHA has been successfully passed to the to the client;
otherwise: sending, by the server, information that the CAPTCHA has not been successfully passed to the client;
the browser or web application being configured for:
sending a request for providing a CAPTCHA to a server;
presenting the question;
presenting, consecutively, for each of the subsets at a predefined position any of its pictures for a predetermined presentation time, wherein the pictures of the respective subset are presented in the order of a predefined enumeration of the pictures in that subset,
wherein the browser or web application is configured for detecting, for each of the pictures or subsets presented, whether or not the user performs a confirmation action during the presentation time of the picture, and
wherein the browser or web application is configured for sending to the server the temporal identifier(s) assigned to the presented picture(s) while the confirmation action has been performed and the question identifier, when the browser or web application has detected a confirmation action.

## Patentansprüche

1. Verfahren zum Bereitstellen eines vollständig automatisierten öffentlichen Turing-Tests, um Computer und Menschen auseinanderzuhalten, CAPTCHA, das die Schritte aufweist:
(1a) Senden durch einen Browser oder eine Web-Anwendung eines Clients einer Anforderung zum Bereitstellen eines CAPTCHA an einen Server;
(1b) Erzeugen auf einem Server einer Menge von Bildern, wobei die Menge mindestens zwei Bilder enthält, wobei jedem der Bilder ein eindeutiger Bezeichner und ein vorübergehender Bezeichner zugeordnet wird, der durch jede Anforderung beruhend auf dem eindeutigen Bezeichner erzeugt wird; und Senden der Menge der Bilder und der vorübergehenden Bezeichner und der Zuordnung zwischen vorübergehenden Bezeichnern und Bildern an den Browser oder die Web-Anwendung;
(1b') Erzeugen auf dem Server einer Frage, die mit einem oder mehreren der Bilder der Menge verknüpft ist, und wobei der Frage ein Fragenbezeichner zugeordnet wird; Senden der Frage und des Fragenbezeichners an den Browser oder die Web-Anwendung; und Speichern auf dem Server der vorübergehenden Bezeichner, die den Bildern zugeordnet sind, mit denen die Frage verknüpft ist, und des Fragenbezeichners;
(1b") Verteilen der Bilder der Menge an eine oder mehrere Teilmenge(n) von Bildern, wobei jede der Teilmengen mindestens zwei Bilder aufweist;
(1b'") Definieren für jede der Teilmengen einer Darstellungsposition innerhalb des Browsers oder der Web-Anwendung, und Erzeugen für jede der Teilmengen, einer Nummerierung für die Bilder der jeweiligen Teilmenge;
(1c) Präsentieren im Browser oder der Web-Anwendung der Frage;
(1d) aufeinanderfolgendes Präsentieren im Browser oder der Web-Anwendung für jede der Teilmengen an der im Schritt (1b'") definierten Position irgendeines ihrer Bilder für ein vorgegebene Präsentationszeit, wobei die Bilder der jeweiligen Teilmenge in der Reihenfolge der Nummerierung der Bilder in der Teilmenge präsentiert werden,
(1e) wobei für jedes der präsentierten Bilder oder Teilmengen der Browser oder die Web-Anwendung ermittelt, ob der Benutzer eine Bestätigungsaktion während der Präsentationszeit des Bilds durchführt, und
(1f) wobei, wenn der Browser oder die Web-Anwendung eine Bestätigungsaktion ermittelt hat, der (die) vorübergehende(n) Bezeichner, die dem (den) präsentierten Bild(ern) zugeordnet wird (werden), während die Bestätigungsaktion durchgeführt worden ist, und der Fragenbezeichner an den Server gesendet werden;
(1g) wenn ein oder mehrere vorübergehende Bezeichner und der Fragenbezeichner durch den Server vom Client empfangen worden sind: Prüfen durch den Server auf die Identität des (der) vorübergehenden Bezeichner(s), der im vorhergehenden Schritt an den Server gesendet wurde, und des (der) vorübergehenden Bezeichner(s), der im Schritt (1b') für den in diesem Schritt empfangenen Fragenbezeichner gespeichert wurde;
(1h) wenn die Identität im vorhergehenden Schritt bestätigt worden ist: Senden durch den Server von Informationen an den Client, dass der CAPTCHA erfolgreich bestanden worden ist;
andernfalls Senden durch den Server von Informationen an den Client, dass der CAPTCHA nicht erfolgreich bestanden worden ist.

2. Verfahren nach Anspruch 1, wobei im Schritt (1b) die Menge der Bilder durch Auswählen einer Menge aus einem Pool von festen Sätzen von Bildern erzeugt wird, die auf dem Server verfügbar gehalten werden.

3. Verfahren nach Anspruch 1, wobei im Schritt (1b) die Menge der Bilder durch Auswählen von mindestens zwei Bildern aus einem Pool von Bildern erzeugt wird, die auf dem Server verfügbar gehalten werden.

4. Verfahren nach einem der Ansprüche 1 bis 3, wobei:
im Schritt (1b") die Verteilung der Bilder an die Teilmengen zufällig ausgeführt wird; und/oder
im Schritt (1b"') die Definition der Darstellungspositionen für die Bilder der Teilmengen zufällig ausgeführt wird; und/oder
im Schritt (1b'") für irgendeine der Teilmengen die Nummerierung für die Bilder auf eine zufällige Weise erzeugt wird.

5. Verfahren nach einem der Ansprüche 1 bis 4,
wobei im Schritt (1b"), die Verteilung der Bilder an die Teilmengen durch den Server ausgeführt wird, und Schritt (1b") ferner den Teilschritt aufweist:
Senden durch den Server der durch die Teilmengen definierten Anordnung der Bilder an den Browser oder die Web-Anwendung; und/oder
wobei im Schritt (1b'") für mindestens einen Teil der Teilmengen die Nummerierung für die Bilder durch den Server erzeugt wird, und wobei Schritt (1b'") ferner den Teilschritt aufweist:
Senden durch den Server der erzeugten Nummerierung(en) der Bilder an den Browser oder die Web-Anwendung.

6. Verfahren nach einem der Ansprüche 1 bis 5, wobei Schritt (1b") und/oder Schritt (1b'") durch den Browser oder die Web-Anwendung durchgeführt werden.

7. Verfahren nach einem der Ansprüche 1 bis 6, wobei, wenn alle Bilder ohne Ermittlung einer Bestätigungsaktion im Schritt (1e) präsentiert worden sind, die Schritte (1f) bis (1h) durch den folgenden Schritt ersetzt werden:
Beenden des CAPTCHA und Übergeben an den Browser oder die Web-Anwendung der Informationen, dass der CAPTCHA nicht erfolgreich bestanden worden ist.

8. Verfahren nach einem der Ansprüche 1 bis 6, wobei, wenn alle Bilder ohne Ermittlung einer Bestätigungsaktion im Schritt (1e) präsentiert worden sind, die Schritte (1d) und (1e) wiederholt werden,
wobei die Anzahl der Wiederholungen vorzugsweise begrenzt ist, besonders bevorzugt auf eine maximale Anzahl von 2 Wiederholungen begrenzt ist und ganz besonders bevorzugt auf eine maximale Anzahl von 1 Wiederholung begrenzt ist.

9. Verfahren nach einem der Ansprüche 1 bis 8, wobei für jede der Teilmengen die Anzahl der Bilder in der Teilmenge zwischen 2 und 20, vorzugsweise zwischen 3 und 10 und ganz besonders bevorzugt 4 oder 5 beträgt.

10. Verfahren nach einem der Ansprüche 1 bis 9, wobei die Präsentationszeit für jedes der präsentierten Bilder zwischen 0,5 und 10 Sekunden, vorzugsweise zwischen 1 und 5 Sekunden und ganz besonders bevorzugt zwischen 2 und 4 Sekunden liegt.

11. Verfahren nach einem der Ansprüche 1 bis 10, wobei, wenn eine vorgegebene Maximalzeit überschritten wird, der folgende Schritt durchgeführt wird:
Beenden des CAPTCHA und Übergeben an den Browser oder die Web-Anwendung der Informationen, dass der CAPTCHA nicht erfolgreich bestanden worden ist.

12. Verfahren nach einem der Ansprüche 1 bis 11, wobei die folgenden Schritte durchgeführt werden:
(i) Wiederholen des Schritts (1b) mit der zusätzlichen Bedingung, dass die Frage oder Anforderung mit mindestens einem der Bilder der neu erzeugten Menge von Bildern verknüpft wird, wobei sich die neue Menge der Bilder von der (den) vorher erzeugten Menge(n) von Bildern unterscheidet;
(ii) Wiederholen der Schritte des Verfahrens beginnend mit Schritt (1b"), wobei die Wiederholung gemäß einem der Schritte (i) und (ii) auf eine vorgegebene maximale Anzahl begrenzt ist, wobei die maximale Anzahl vorzugsweise auf 1, 2 oder 3 festgelegt ist.

13. Verfahren nach einem der Ansprüche 1 bis 11, wobei der folgende Schritt durchgeführt wird:
(a) Wiederholen der Schritte des Verfahrens beginnend mit Schritt (1b'),
wobei sich die neue Frage, die im Schritt (1b') erzeugt wird, von der (den) vorher erzeugten Frage(n) unterscheidet,
wobei die Wiederholung gemäß Schritt (a) auf eine vorgegebene maximale Anzahl begrenzt ist, wobei die maximale Anzahl vorzugsweise auf 1, 2 oder 3 festgelegt ist.

14. Verfahren nach einem der Ansprüche 1 bis 11, wobei der folgende Schritt durchgeführt wird:
(A) Wiederholen der Schritte des Verfahrens beginnend mit Schritt (1b),
wobei sich die neue Menge der Bilder von der (den) vorher erzeugten Menge(n) von Bildern unterscheidet,
wobei sich die neue Frage von der (den) vorher erzeugten Frage(n) unterscheidet, und
wobei die Wiederholung gemäß Schritt (A) auf eine vorgegebene maximale Anzahl begrenzt ist, wobei die maximale Anzahl vorzugsweise auf 1, 2 oder 3 festgelegt ist.

15. Verfahren nach einem der Ansprüche 1 bis 14, wobei Schritt (1f) zusätzlich aufweist:
Senden eines Geheimcodes des Clients an den Server; und Schritt (1g) zusätzlich aufweist: Empfangen des Geheimcodes und Verwenden des Geheimcodes zum Authentifizieren des Clients.

16. System zum Bereitstellen eines vollständig automatisierten öffentlichen Turing-Tests, um Computer und Menschen auseinanderzuhalten, CAPTCHA, gemäß dem Verfahren nach einem der Ansprüche 1 bis 14, wobei das System aufweist:
einen Server; und
einen Client, auf dem ein Browser oder eine Web-Anwendung installiert ist;
wobei der Server konfiguriert ist zum:
Erzeugen einer Menge von Bildern, wobei die Menge mindestens zwei Bilder enthält, wobei jedem der Bilder ein eindeutiger Bezeichner und ein vorübergehender Bezeichner zugeordnet wird, der durch jede Anforderung beruhend auf dem eindeutigen Bezeichner erzeugt wird;
Senden der Menge der Bilder und der vorübergehenden Bezeichner, und der Zuordnung zwischen vorübergehenden Bezeichnern und Bildern an den Browser oder die Web-Anwendung;
Erzeugen einer Frage, die mit einem oder mehreren der Bilder der Menge verknüpft ist, und wobei der Frage ein Fragenbezeichner zugeordnet wird;
Senden der Frage und des Fragenbezeichners an den Browser oder die Web-Anwendung;
Speichern der vorübergehenden Bezeichner, die den Bildern zugeordnet sind, mit denen die Frage verknüpft ist, und des Fragenbezeichners;
wenn ein oder mehrere vorübergehende Bezeichner und der Fragenbezeichner durch den Server vom Client empfangen worden sind: Prüfen auf eine Identität des (der) an den Server gesendeten vorübergehenden Bezeichner und des (der) gespeicherten vorübergehenden Bezeichners;
wenn die Identität bestätigt worden ist: Senden von Informationen an den Client, dass der CAPTCHA erfolgreich bestanden worden ist;
andernfalls: Senden durch den Server von Informationen an den Client, dass der CAPTCHA nicht erfolgreich bestanden worden ist;
wobei der Browser oder die Web-Anwendung konfiguriert ist zum:
Senden einer Anforderung zum Bereitstellen eines CAPTCHA an einen Server;
Präsentieren der Frage;
aufeinanderfolgendes Präsentieren für jede der Teilmengen an einer vordefinierten Position irgendeines ihrer Bilder für eine vorgegebene Präsentationszeit, wobei die Bilder der jeweiligen Teilmenge in der Reihenfolge einer vordefinierten Nummerierung der Bilder in der Teilmenge präsentiert werden,
wobei der Browser oder die Web-Anwendung konfiguriert ist zum Ermitteln für jedes der präsentierten Bilder oder Teilmengen, ob der Benutzer eine Bestätigungsaktion während der Präsentationszeit des Bilds durchführt, und
wobei der Browser oder die Web-Anwendung konfiguriert ist zum Senden an den Server des (der) vorübergehenden Bezeichners, der (die) den präsentierten Bild(ern) zugeordnet werden, während die Bestätigungsaktion durchgeführt worden ist, und des Fragenbezeichners, wenn der Browser oder die Web-Anwendung eine Bestätigungsaktion ermittelt hat.

## Revendications

1. Procédé de prestation d'un test de Turing public complètement automatisé pour distinguer l'ordinateur de l'humain, CAPTCHA, comprenant les étapes suivantes :
(la) émission, par un navigateur ou une application Internet d'un client, d'une demande de prestation d'un CAPTCHA à un serveur ;
(1b) génération sur un serveur d'un ensemble d'images, ledit ensemble contenant au moins deux images, un identifiant unique étant affecté à chacune desdites images, et un identifiant temporel généré par chaque demande sur la base de l'identifiant unique ;
et envoi de l'ensemble d'images et des identifiants temporels, et de l'affectation entre identifiants temporels et images au navigateur ou à l'application Internet ;
(1b') génération sur le serveur, d'une question associée à une ou plusieurs images de l'ensemble, un identifiant de question étant affecté à ladite question ;
envoi de la question et de l'identifiant de question au navigateur ou à l'application Internet ; et mémorisation sur le serveur des identifiants temporels affectés aux images, auxquelles la question est associée, et de l'identifiant de question ;
(1b") distribution des images de l'ensemble en un ou plusieurs sous-ensembles d'images, chacun desdits sous-ensembles comprenant au moins deux images ;
(1b'") définition, pour chacun des sous-ensembles, d'une position de présentation à l'intérieur du navigateur ou de l'application Internet, et génération, pour chacun des sous-ensembles, d'une numérotation pour les images dudit sous-ensemble ;
(1c) présentation de la question dans le navigateur ou l'application Internet ;
(1d) présentation consécutive dans le navigateur ou l'application Internet, pour chacun des sous-ensembles à la position définie lors de l'étape (1b'"), d'une de ses images pendant un temps de présentation défini, les images de chaque sous-ensemble étant présentées dans l'ordre de numérotation des images dans ledit sous-ensemble,
(1e) où, pour chaque image ou sous-ensemble présentés, le navigateur ou l'application Internet détecte si l'utilisateur exécute ou non une action de confirmation pendant le temps de présentation de l'image, et
(1f) où, si le navigateur ou l'application Internet détecte une action de confirmation, l'identifiant ou les identifiants temporels affectés à l'image ou aux images présentées pendant que l'action de confirmation a été exécutée et l'identifiant de question sont adressés au serveur ;
(1g) si un ou plusieurs identifiants temporels et l'identifiant de question ont été reçus par le serveur du client : contrôle, par le serveur, de l'identité de l'identifiant ou des identifiants temporels adressés au serveur lors de l'étape précédente, et de l'identifiant ou des identifiants temporels mémorisés lors de l'étape (1b') pour l'identifiant de question reçu lors de cette étape ;
(1h) si l'identité a été confirmée lors de l'étape précédente : envoi par le serveur au client d'une information selon laquelle le CAPTCHA a été passé avec succès ;
sinon : envoi par le serveur au client d'une information selon laquelle le CAPTCHA n'a pas été passé avec succès.

2. Procédé selon la revendication 1, où, lors de l'étape (1b), l'ensemble d'images est généré par sélection d'un ensemble dans un groupe d'ensembles d'images fixes maintenues disponibles sur le serveur.

3. Procédé selon la revendication 1, où, lors de l'étape (1b), l'ensemble d'images est généré par sélection d'au moins deux images dans un groupe d'images maintenues disponibles sur le serveur.

4. Procédé selon l'une des revendications 1 à 3, où :
lors de l'étape (1b"), la distribution des images aux sous-ensembles est exécutée de manière aléatoire ; et/ou,
lors de l'étape (1b'"), la définition des positions de présentation pour les images des sous-ensembles est exécutée de manière aléatoire ; et/ou,
lors de l'étape (1b'"), pour tous les sous-ensembles, la numérotation des images est générée de manière aléatoire.

5. Procédé selon l'une des revendications 1 à 4,
où, lors de l'étape (1b"), la distribution des images aux sous-ensembles est exécutée par le serveur, et l'étape (1b") comprend une autre sous-étape :
d'envoi par le serveur de la disposition des images définie par les sous-ensembles au navigateur ou à l'application Internet ; et/ou,
où, lors de l'étape (1b'"), pour au moins une partie des sous-ensembles, la numérotation des images est générée par le serveur, et où l'étape (1b"') comprend une autre sous-étape :
d'envoi par le serveur de la ou des numérotations générées des images au navigateur ou à l'application Internet.

6. Procédé selon l'une des revendications 1 à 5, où l'étape (1b") et/ou l'étape (1b'") sont exécutées par le navigateur ou l'application Internet.

7. Procédé selon l'une des revendications 1 à 6, où, si toutes les images ont été présentées sans détection d'une action de confirmation lors de l'étape (le), l'étape suivante est substituée aux étapes (1f) à (1h) :
arrêt du CAPTCHA et transmission au navigateur ou à l'application Internet de l'information selon laquelle le CAPTCHA n'a pas été passé avec succès.

8. Procédé selon l'une des revendications 1 à 6, où, si toutes les images ont été présentées sans détection d'une action de confirmation lors de l'étape (1e), les étapes (1d) et (1e) sont répétées,
le nombre de répétitions étant avantageusement limité, préférentiellement limité à un maximum de 2 répétitions, et tout particulièrement limité à un maximum de 1 répétition.

9. Procédé selon l'une des revendications 1 à 8, où, pour chacun des sous-ensembles, le nombre d'images dans le sous-ensemble est compris entre 2 et 20, avantageusement entre 3 et 10, et est préférentiellement de 4 ou de 5.

10. Procédé selon l'une des revendications 1 à 9, où le temps de présentation de chacun des images présentées est compris entre 0,5 et 10 secondes, avantageusement entre 1 et 5 secondes, et préférentiellement entre 2 et 4 secondes.

11. Procédé selon l'une des revendications 1 à 10, où l'étape suivante est exécutée si un temps maximum défini est dépassé :
arrêt du CAPTCHA et transmission au navigateur ou à l'application Internet de l'information selon laquelle le CAPTCHA n'a pas été passé avec succès.

12. Procédé selon l'une des revendications 1 à 11, où les étapes suivantes sont exécutées :
(i) répétition de l'étape (1b) avec la condition additionnelle que la question ou la demande est associée à au moins une des images de l'ensemble d'images nouvellement généré,
le nouvel ensemble d'images étant différent de l'ensemble ou des ensembles d'images précédemment générés ;
(ii) répétition des étapes de procédé à partir de l'étape (1b"),
la répétition suivant l'une des étapes (i) et (ii) étant limitée à un nombre maximal défini, ledit nombre maximal étant fixé préférentiellement à 1, 2 ou 3.

13. Procédé selon l'une des revendications 1 à 11, où l'étape suivante est exécutée :
(a) répétition des étapes de procédé à partir de l'étape (1b'),
la nouvelle question générée lors de l'étape (1b') étant différente de la ou des questions précédemment générées,
la répétition suivant l'étape (a) étant limitée à un nombre maximal défini, ledit nombre maximal étant fixé préférentiellement à 1, 2 ou 3.

14. Procédé selon l'une des revendications 1 à 11, où l'étape suivante est exécutée :
(A) répétition des étapes de procédé à partir de l'étape (1b),
le nouvel ensemble d'images étant différent de l'ensemble ou des ensembles d'images précédemment générés,
la nouvelle question étant différente de la ou des questions précédemment générées, et la répétition suivant l'étape (A) étant limitée à un nombre maximal défini, ledit nombre maximal étant fixé préférentiellement à 1, 2 ou 3.

15. Procédé selon l'une des revendications 1 à 14, où l'étape (1f) comprend en outre :
l'envoi d'un code secret du client au serveur ; et l'étape (1g) comprend en outre : la réception du code secret et l'utilisation du code secret pour authentifier le client.

16. Système pour la prestation d'un test de Turing public complètement automatisé pour distinguer l'ordinateur de l'humain, CAPTCHA, conformément au procédé selon l'une des revendications 1 à 14, ledit système comprenant :
un serveur ; et
un client, sur lequel un navigateur ou une application Internet sont installés ;
le serveur étant prévu pour :
la génération d'un ensemble d'images, ledit ensemble contenant au moins deux images, un identifiant unique étant affecté à chacune desdites images, et un identifiant temporel généré par chaque demande sur la base de l'identifiant unique ;
l'envoi de l'ensemble d'images et des identifiants temporels, et de l'affectation entre identifiants temporels et images au navigateur ou à l'application Internet ;
la génération d'une question associée à une ou plusieurs images de l'ensemble, un identifiant de question étant affecté à ladite question ;
l'envoi de la question et de l'identifiant de question au navigateur ou à l'application Internet ;
la mémorisation des identifiants temporels affectés aux images, auxquelles la question est associée, et de l'identifiant de question ;
si un ou plusieurs identifiants temporels et l'identifiant de question ont été reçus par le serveur du client : contrôle de l'identité de l'identifiant ou des identifiants temporels adressés au serveur et de l'identifiant ou des identifiants temporels mémorisés ;
si l'identité a été confirmée : envoi au client d'une information selon laquelle le CAPTCHA a été passé avec succès ;
sinon : envoi par le serveur au client d'une information selon laquelle le CAPTCHA n'a pas été passé avec succès ;
le navigateur ou l'application Internet étant prévus pour :
l'envoi d'une demande de prestation d'un CAPTCHA à un serveur ;
la présentation de la question ;
la présentation consécutive, pour chacun des sous-ensembles à une position définie, d'une de ses images pendant un temps de présentation défini, les images de chaque sous-ensemble étant présentées dans l'ordre de numérotation des images dans ledit sous-ensemble,
où, pour chaque image ou sous-ensemble présentés, le navigateur ou l'application Internet sont prévus pour détecter si l'utilisateur exécute ou non une action de confirmation pendant le temps de présentation de l'image, et
où le navigateur ou l'application Internet sont prévus pour adresser au serveur l'identifiant ou les identifiants temporels affectés à l'image ou aux images présentées pendant l'exécution de l'action de confirmation et l'identifiant de question quand le navigateur ou l'application Internet détectent une action de confirmation.
